(19) Europäisches Patentamt
European Patent Office
Office européen des brevets

(11) **EP 3 824 987 B1**

(12) **EUROPEAN PATENT SPECIFICATION**

(45) Date of publication and mention
of the grant of the patent:
**23.08.2023   Bulletin 2023/34**

(21) Application number: **19838566.8**

(22) Date of filing: **12.07.2019**

(51) International Patent Classification (IPC):
**B01D 69/02** *(2006.01)*    **B01D 69/12** *(2006.01)*
**B01D 39/08** *(2006.01)*    **B01D 39/16** *(2006.01)*
**B01D 39/12** *(2006.01)*    **B01D 39/20** *(2006.01)*
**B01D 63/14** *(2006.01)*    **B01D 71/36** *(2006.01)*

(52) Cooperative Patent Classification (CPC):
**B01D 69/12; B01D 39/083; B01D 39/12;**
**B01D 39/1623; B01D 39/1692; B01D 39/2013;**
**B01D 39/2017; B01D 39/2065; B01D 39/2079;**
**B01D 63/14; B01D 69/02; B01D 71/36;**
B01D 2239/0233; B01D 2239/025;
B01D 2239/0421;                    (Cont.)

(86) International application number:
**PCT/JP2019/027787**

(87) International publication number:
**WO 2020/017472 (23.01.2020 Gazette 2020/04)**

(54) **FILTERING MEDIUM FOR AIR FILTERS, FILTER PACK, AND AIR FILTER UNIT**

FILTERMEDIUM FÜR LUFTFILTER, FILTERPAKET UND LUFTFILTEREINHEIT

MILIEU DE FILTRAGE POUR FILTRES À AIR, ENSEMBLE FILTRANT, ET UNITÉ DE FILTRE À AIR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **20.07.2018   JP 2018137159**

(43) Date of publication of application:
**26.05.2021   Bulletin 2021/21**

(73) Proprietor: **DAIKIN INDUSTRIES, LTD.**
**Osaka-Shi, Osaka 530-0001 (JP)**

(72) Inventors:
 • **INUI, Kunihiko**
  **Osaka-shi Osaka 530-8323 (JP)**
 • **HARA, Satoshi**
  **Osaka-shi Osaka 530-8323 (JP)**
 • **SHIBUYA, Yoshiyuki**
  **Osaka-shi Osaka 530-8323 (JP)**
 • **KIYOTANI, Hideyuki**
  **Osaka-shi Osaka 530-8323 (JP)**
 • **CHAEN, Shinichi**
  **Osaka-shi Osaka 530-8323 (JP)**

 • **YAMAMOTO, Seigo**
  **Osaka-shi Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 061 512       EP-A1- 3 357 564**
**EP-A1- 3 427 808       EP-A1- 3 520 873**
**JP-A- 2018 051 544     JP-A- 2018 111 077**

(52) Cooperative Patent Classification (CPC): (Cont.)
B01D 2239/0478; B01D 2239/0622;
B01D 2239/0627; B01D 2239/0631;
B01D 2239/065; B01D 2239/0654;
B01D 2239/0668; B01D 2239/0681;
B01D 2239/083; B01D 2239/086; B01D 2239/1225;
B01D 2239/1233; B01D 2239/1241;
B01D 2239/1258; B01D 2325/20

**Description**

Technical Field

The present disclosure relates to an air filter medium, a filter pack, and an air filter unit.

Background Art

In the related art, for example, porous films formed of polytetrafluoroethylene (hereafter referred to as PTFE) are used as dust-collecting filters to provide a sufficiently cleaned space. Such a PTFE porous film has a higher collection efficiency of dust than glass fiber filter media at the same pressure loss, and therefore is particularly suitably used for HEPA filters (high efficiency particulate air filters) and ULPA filters (ultra low penetration air filters).

For example, an air filter medium disclosed in PTL 1 (Japanese Unexamined Patent Application Publication No. 2017-64713) and having a structure in which two PTFE porous films are stacked on top of each other has been proposed as such a filter. PTL 1 describes that when the air filter medium includes a PTFE porous film disposed on the upstream side and having an average fiber diameter of 0.24 to 0.45 um and a PTFE porous film disposed on the downstream side and having an average fiber diameter of 0.24 to 0.45 um, clogging due to oil mist (oil particles) can be suppressed.

EP 3 427 808 A1 describes a filter medium for an air filter has a first and second porous film, each of the first porous film and the second porous film has a pressure loss of 30 Pa or more and 90 Pa or less when air is passed through each porous film at a flow rate of 5.3 cm/s, and has a collection efficiency of 95% or more and 99.9% or less for NaCl particles having a particle diameter of 0.3 $\mu$m when air containing the NaCl particles is passed through each of the porous films at a flow rate of 5.3 cm/s.

EP 3 357 564 A1 describes an air filter medium that includes a first porous PTFE membrane and a second porous PTFE membrane. An average fiber diameter of fibers included in the first porous PTFE membrane is 0.24 to 0.45 $\mu$m, an average fiber diameter of fibers included in the second porous PTFE membrane is 0.04 to 0.23 $\mu$m.

EP 3 061 512 A1 describes an embossed air filter filtration medium, a filter pack and an air filter unit that shall minimize a rise in pressure loss associated with the embossing process. In Examples 6 and 7, an air filter medium is described that comprises two identical fluororesin porous films, each having a thickness of 38.6 $\mu$m, an average fiber diameter of 150 nm, and a filling factor of 4.2%, together with spunbonded non-woven fabrics that serve as air-permeable support materials.

Summary of Invention

Technical Problem

However, the present inventors have newly found that the collection efficiency of the air filter medium gradually decreases when the collection target is liquid particles.

In view of the foregoing, it is an object of the present disclosure to provide an air filter medium, a filter pack, and an air filter unit in which the decrease in collection efficiency can be suppressed.

Solution to Problem

The present inventors have newly found that the collection efficiency of the air filter medium gradually decreases when the collection target is liquid particles. To suppress the decrease in collection efficiency, the present disclosure has been completed.

An air filter medium according to the present invention (referred to below as "a first aspect") includes a first fluororesin porous film (31) having a thickness of 10 um or more, a filling factor of 2% or more and 9% or less, and a fiber diameter of 60 nm or more and 200 nm or less, and a second fluororesin porous film (32), disposed on a downstream side of an air flow with respect to the first fluororesin porous film, having a filling factor of 2% or more and 9% or less, and a fiber diameter of 60 nm or more and 200 nm or less,

wherein the first fluororesin porous film (31) has a larger fiber diameter than the second fluororesin porous film (32), and

wherein the first fluororesin porous film (31) has a smaller filling factor than the second fluororesin porous film (32), wherein the filling factor is defined by the following formula:

```
Filling factor (%) = (basis weight of porous

film)/(thickness of porous film)/(specific gravity of raw

material) × 100,
```

wherein the PAO permeability ratio, defined as the ratio of final permeability/initial permeability of less than 3.0. The initial permeability of polyalphaolefin particles refers to a permeability of polyalphaolefin particles when air containing the polyalphaolefin particles having a number median diameter of 0.25 um is passed through the air filter medium at a flow velocity of 5.3 cm/s. The final permeability of polyalphaolefin particles refers to a permeability of polyalphaolefin particles when air containing the polyalphaolefin particles having a number median diameter of 0.25 um is continuously passed through the air filter medium at a flow velocity of 5.3 cm/s and the pressure loss is increased by 250 Pa.

In this air filter medium, the decrease in collection efficiency can be suppressed even after the pressure loss has increased by 250 Pa by using polyalphaolefin particles as a target.

A second aspect of the present invention relates to the use of the air filter medium described above while the PAO permeability ratio (final permeability/initial permeability) is less than 3.0.

Even in an air filter that is supposed to reach the end of its life when the pressure loss increases by 250 Pa, this air filter medium can be used at a low permeability until the end of the life.

An air filter medium according to a third aspect is the air filter medium according to the first aspect or the second aspect, wherein the PAO permeability ratio is 1.0 or more. The NaCl permeability ratio (final permeability/initial permeability) is less than 1.0. The initial permeability of NaCl particles refers to a permeability of 0.1 um NaCl particles when air containing the 0.1 um NaCl particles is passed through the air filter medium in an initial state at a flow velocity of 5.3 cm/s. The final permeability of NaCl particles refers to a permeability of 0.1 um NaCl particles when air containing the 0.1 um NaCl particles is continuously passed through the air filter medium at a flow velocity of 5.3 cm/s and the pressure loss is increased by 250 Pa.

For an air filter medium in which the collection efficiency tends to increase (the permeability decreases) with use when the collection target is solid particles and the collection efficiency tends to decrease (the permeability increases) with use when the collection target is liquid particles, this air filter medium can suppress the increase in permeability of liquid particles with use.

In one embodiment, the initial value of PF calculated from formula PF = {-log((100 - collection efficiency (%))/100)} /(pressure loss (Pa)/1000) using pressure loss and collection efficiency determined from NaCl particles having a particle size of 0.3 um may be 25.0 or more.

An air filter medium according to a fifth aspect is the air filter medium according to any one of the first aspect to the fourth aspect, wherein the dust-holding capacity of polyalphaolefin particles when air containing the polyalphaolefin particles having a number median diameter of 0.25 um is continuously passed through the air filter medium at a flow velocity of 5.3 cm/s and the pressure loss is increased by 250 Pa is 20.0 g/m$^2$ or more.

In this air filter medium, the decrease in collection efficiency can be suppressed while a sufficient dust-holding capacity is achieved.

An air filter medium according to a sixth aspect is the air filter medium according to the first to fifth aspect, wherein the first fluororesin porous film has a thickness of 30 um or more.

In this air filter medium, the decrease in collection efficiency can be more sufficiently suppressed.

An air filter medium according to a seventh aspect is the air filter medium according to any one of the first aspect to the sixth aspect and includes a fluororesin porous film mainly constituted by a fibrillatable polytetrafluoroethylene, a non-fibril-forming non-melting-processable component, and a non-fibril-forming hot-melt-processable component having a melting point of lower than 320°C, as defined in Claim 3.

PTFE porous films mainly constituted by only a known fibrillatable PTFE (high-molecular-weight PTFE) include many minute fibrils having a small fiber diameter and have a large surface area per one fiber, and thus have high collection efficiency. However, such PTFE porous films have a relatively small thickness and include many fibers that overlap each other, and thus cannot hold a large amount of fine particles. Consequently, high collection efficiency per one fiber is not effectively exhibited.

In contrast, this air filter medium mainly includes three components: a fibrillatable polytetrafluoroethylene, a non-fibril-forming non-melting-processable component, and a non-fibril-forming hot-melt-processable component having a melting point of lower than 320°C. Therefore, this air filter medium includes relatively thicker fibers and thus has a higher porosity and a larger thickness than known PTFE porous films. Thus, the dust-holding capacity can be increased.

Each of the above air filter media may further include one or more air-permeable supporting members for increasing the strength.

A filter pack according to an eighth aspect includes the air filter medium according to any one of the first aspect to the seventh aspect, wherein the air filter medium is processed so as to have a zigzag shape in which mountain folds and valley folds are alternately repeated. The "filter pack" is not limited, and has, for example, a zigzag shape folded by alternately repeating mountain folds and valley folds unlike a flat sheet-like shape. The filter pack may have a shape adjusted so as to be accommodated in a particular frame body.

An air filter unit according to a ninth aspect includes the air filter medium according to any one of the first aspect to the seventh aspect or the filter pack according to the eighth aspect and a frame body holding the air filter medium or the filter pack.

Advantageous Effects of Invention

In the air filter medium, the filter pack, or the air filter unit according to the present disclosure, the decrease in collection efficiency can be suppressed.

Brief Description of Drawings

[Fig. 1] Fig. 1 is a schematic sectional view illustrating a layer structure of an air filter medium 1.
[Fig. 2] Fig. 2 is a schematic sectional view illustrating a layer structure of an air filter medium 2.
[Fig. 3] Fig. 3 is a schematic sectional view illustrating a layer structure of an air filter medium 3. The air filter medium 3 shown in Fig. 3 is given for illustrative purposes only and does not form part of the claimed subject matter.
[Fig. 4] Fig. 4 is an external perspective view of a filter pack.
[Fig. 5] Fig. 5 is an external perspective view of an air filter unit.

Description of Embodiments

Hereafter, an air filter medium (hereafter also simply referred to as a filter medium), a filter pack, and an air filter unit will be described based on embodiments.

(1) Air filter medium

The air filter medium is not limited as long as the air filter medium includes two porous films containing a fluororesin satisfying the requirements set out in Claim 1, and the PAO permeability ratio (final permeability/initial permeability) of an initial permeability of polyalphaolefin particles when air containing the polyalphaolefin particles having a number median diameter of 0.25 um is passed through the air filter medium at a flow velocity of 5.3 cm/s and a final permeability of polyalphaolefin particles when air containing the polyalphaolefin particles having a number median diameter of 0.25 um is continuously passed through the air filter medium at a flow velocity of 5.3 cm/s and the pressure loss is increased by 250 Pa is less than 3.0. Thus, the air filter medium can be used while a decrease in collection efficiency from the initial state is suppressed to immediately before the air filter medium reaches the end of its life at which the pressure loss increases by 250 Pa from the initial state. Therefore, the air filter medium is preferably used at a PAO permeability ratio of less than 3.0. From the viewpoint of sufficiently suppressing the decrease in collection efficiency, the PAO permeability ratio (final permeability/initial permeability) is more preferably less than 2.5. In this regard, the air filter medium is preferably used at a PAO permeability ratio of less than 2.5.

The air filter medium may have a PAO permeability ratio of 1.0 or more. In other words, when liquid particles such as PAO particles are used from the initial state, the permeability of the liquid particles may increase. Even if the air filter medium has such a characteristic in which the permeability of liquid particles increases when the air filter medium is used for liquid particles, the increase in permeability is suppressed, which can suppress the decrease in collection efficiency. The air filter medium having such a characteristic in which the permeability of liquid particles increases when the air filter medium is used for liquid particles may have a characteristic in which the permeability of solid particles decreases. Specifically, the NaCl permeability ratio (final permeability/initial permeability) of an initial permeability of 0.1 um NaCl particles when air containing the 0.1 um NaCl particles is passed through the air filter medium at a flow velocity of 5.3 cm/s and a final permeability of 0.1 um NaCl particles when air containing the 0.1 um NaCl particles is continuously passed through the air filter medium at a flow velocity of 5.3 cm/s and the pressure loss is increased by 250 Pa may be less than 1.0, less than 0.7, or less than 0.4. Thus, even if the air filter medium has such a characteristic in which the permeability gradually decreases (the collection efficiency increases) when the air filter medium is used for solid particles whereas the permeability gradually increases (the collection efficiency decreases) when the air filter medium is used for liquid particles, the increase in permeability is suppressed, which can suppress the decrease in collection efficiency.

Herein, the air filter medium having such a characteristic in which the permeability gradually decreases (the collection efficiency increases) when the air filter medium is used for solid particles whereas the permeability gradually increases (the collection efficiency decreases) when the air filter medium is used for liquid particles is not limited. The air filter medium is considered to be a filter medium having the following difference between the case where solid particles adhere to fibers constituting the air filter medium and the case where liquid particles adhere to the fibers. That is, when solid particles adhere to fibers of such an air filter medium, the solid particles that have adhered to fibers function like new fibers and also collect flowing solid particles. This probably increases the collection efficiency of the air filter medium and decreases the permeability. On the other hand, when liquid particles adhere to fibers of such an air filter medium, the liquid particles that have adhered to fibers become entangled around the fibers. As a result, the fibers to which the liquid particles have adhered act as if having a large fiber diameter, and liquid particles tend to pass through portions between the fibers acting as if having a large fiber diameter. This probably decreases the collection efficiency and increases the permeability.

Non-limiting examples of the above-described liquid particles include oil mist, water, and chemical solutions. For example, the liquid particles may contain solid particles mixed therein.

Such liquid particles may have an average particle size of, for example, 0.05 $\mu$m or more and 1.0 $\mu$m or less or 0.1 $\mu$m or more and 0.5 $\mu$m or less. The average particle size of the liquid particles is a number average determined by dynamic light scattering.

The same influence as that due to liquid particles is also probably caused when solid particles that have adhered to fibers constituting the air filter medium are wetted. That is, in the case where solid particles that have adhered to fibers and the resulting aggregated particles are wetted to the degree that flowability is induced, the wetted particles become entangled around fibers like the liquid particles, which probably increases the fiber diameter. The wetting conditions of such solid particles are, for example, as follows. The average particle size of the solid particles is 0.05 $\mu$m or more and 2.5 $\mu$m or less and the relative humidity in a usage environment is 60% or more (preferably 75% or more).

For the air filter medium, the initial value of PF calculated from the formula PF = {-log((100 - collection efficiency (%))/100)}/(pressure loss (Pa)/1000) using the pressure loss and collection efficiency determined from NaCl particles having a particle size of 0.3 um may be 25.0 or more, 30.0 or more, or 32.0 or more. This can suppress a decrease in collection efficiency of liquid particles that tends to be caused when the air filter medium has a high PF.

For the air filter medium, the dust-holding capacity of polyalphaolefin particles when air containing the polyalphaolefin particles having a number median diameter of 0.25 um is continuously passed through the air filter medium at a flow velocity of 5.3 cm/s and the pressure loss is increased by 250 Pa may be 20.0 g/m$^2$ or more and is preferably 25.0 g/m$^2$ or more and more preferably 50.0 g/m$^2$ or more. Thus, the decrease in collection efficiency of liquid particles can be suppressed for the air filter medium having a sufficient dust-holding capacity of liquid particles.

The pressure loss (initial value) of the air filter medium is not limited, and is, for example, preferably less than 200 Pa and may be 30 Pa or more and 155 Pa or less.

The collection efficiency (initial value) of the air filter medium determined from NaCl particles having a particle size of 0.3 um is preferably 98.0% or more and may be 99.97% or more.

The thickness of the air filter medium is not limited, and may be 300 um or more and 1300 um or less or may be 400 um or more and 800 um or less. The thickness of the air filter medium is a thickness measured when a load of 0.3 N is imposed on a measurement target in a particular measuring instrument.

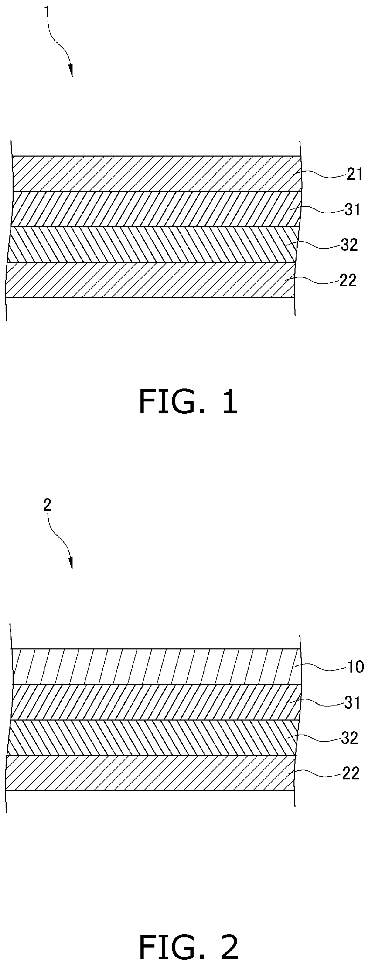

The specific structure of the above-described air filter medium is not limited. For example, as in an air filter medium 1 in Fig. 1, the air filter medium may have a structure in which an upstream air-permeable supporting member 21, a first fluororesin porous film 31, a second fluororesin porous film 32, and a downstream air-permeable supporting member 22 are sequentially stacked on top of each other in the air flow direction.

Alternatively, as in an air filter medium 2 in Fig. 2, the air filter medium may have a structure in which a pre-collection member 10, a first fluororesin porous film 31, a second fluororesin porous film 32, and a downstream air-permeable supporting member 22 are stacked on top of each other in the air flow direction.

The method for stacking these films, members, and the like is not limited. The films and members may be bonded to each other by using an anchor effect provided by partial melting through heating or melting of a hot-melt resin, may be bonded to each other by using a reactive adhesive or the like, or may be simply placed on top of each other. The thickness of each film and each member substantially does not change after the bonding.

The first fluororesin porous film 31 mainly contains a fluororesin. The second fluororesin porous film 32 mainly contains a fluororesin and is disposed on the downstream side of an air flow with respect to the first fluororesin porous film 31. The upstream air-permeable supporting member 21 is disposed on the upstream side of an air flow with respect to the first fluororesin resin porous film 31 so as to support the first fluororesin porous film 31. The downstream air-permeable supporting member 22 is disposed on the downstream side of an air flow with respect to the second fluororesin porous film 32 or on the most downstream side of the air filter medium so as to support the second fluororesin porous film 32. The pre-collection member 10 is disposed on the upstream side of an air flow with respect to the first fluororesin porous film 31 and collects a part of dust in the air flow.

Hereafter, the layers and the relationship between the layers will be specifically described.

(2) Porous film

The first fluororesin porous film 31 and the second fluororesin porous film 32 each mainly contain a fluororesin and preferably have a porous film structure including fibrils (fibers, not illustrated) and nodes (nodal portions, not illustrated) connected to the fibrils.

Herein, the term "mainly" means that when a plurality of components are contained, the fluororesin has the highest content. The first fluororesin porous film 31 and the second fluororesin porous film 32 may contain a fluororesin in an amount of, for example, more than 50 wt% relative to the total amount of constituent components. That is, the first fluororesin porous film 31 and the second fluororesin porous film 32 may contain components other than the fluororesin in an amount of less than 50 wt%.

An example of the components other than the fluororesin is an inorganic filler that is a non-fibril-forming non-melting-processable component (B component) described later.

The fluororesin used for the first fluororesin porous film 31 and the second fluororesin porous film 32 may be formed of one component or two or more components. An example of the fluororesin formed of two or more components is a three-component mixture of a fibrillatable PTFE (hereafter also referred to as an A component), a non-fibril-forming non-melting-processable component (hereafter also referred to as a B component), and a non-fibril-forming hot-melt-processable component (hereafter also referred to as a C component) having a melting point of lower than 320°C. The first fluororesin porous film 31 is preferably formed of these three components in a combined manner. The first fluororesin porous film 31 formed of these three components has a film structure with a higher porosity and a larger thickness than known fibrillatable PTFE (high-molecular-weight PTFE) porous films. Therefore, fine particles in gas can be collected in a large region in a thickness direction of the filter medium, which can improve the dust-holding capacity. When the porous film is formed of these three components, the dust-holding capacity of liquid particles can be particularly increased compared with that of solid particles. From this viewpoint, not only the first fluororesin porous film 31 but also the second fluororesin porous film 32 is more preferably formed of these three components. This provides a sufficient thickness of the entire air filter medium and further improves the dust-holding capacity.

Hereafter, the above three components will be described in detail. The description corresponding to both the first fluororesin porous film 31 and the second fluororesin porous film 32 will be made simply using an expression "porous film" without differentiating the first fluororesin porous film 31 and the second fluororesin porous film 32.

(2-1) A component: fibrillatable PTFE

The fibrillatable PTFE is, for example, a high-molecular-weight PTFE obtained through emulsion polymerization or suspension polymerization of tetrafluoroethylene (TFE). The high molecular weight herein is a molecular weight at which fibrillation is easily caused and fibrils having a large fiber length are obtained during drawing in the production of a porous film, the standard specific gravity (SSG) is 2.130 to 2.230, and the melt flow substantially does not occur because of the high melt viscosity. The SSG of the fibrillatable PTFE is preferably 2.130 to 2.190 and more preferably 2.140 to 2.170 from the viewpoint of achieving ease of fibrillation and providing fibrils having a large fiber length. An excessively high SSG may deteriorate the drawability of the mixture of the components A to c. An excessively low SSG deteriorates the rollability and thus deteriorates the uniformity of the porous film, which may increase the pressure loss of the porous film. From the viewpoint of achieving ease of fibrillation and providing fibrils having a large fiber length, a PTFE obtained through emulsion polymerization is preferred. The standard specific gravity (SSG) is measured in conformity to ASTM D 4895.

The presence or absence of fibrillability, that is, whether fibrillation is achieved or not can be judged by checking whether paste extrusion, which is a typical method for forming a high-molecular-weight PTFE powder obtained from a polymer of TFE, can be performed or not. Normally, paste extrusion can be performed because a high-molecular-weight PTFE has fibrillability. In the case where an unfired formed body obtained through paste extrusion substantially does not have strength or elongation, such as the case where the formed body has an elongation of 0% and is broken when stretched, such a formed body can be considered to have no fibrillability.

The high-molecular-weight PTFE may be a modified polytetrafluoroethylene (hereafter referred to as a modified PTFE), a homo-polytetrafluoroethylene (hereafter referred to as a homo-PTFE), or a mixture of a modified PTFE and a homo-PTFE. Non-limiting examples of the homo-PTFE that can be suitably used include homo-PTFEs disclosed in Japanese Unexamined Patent Application Publication No. 53-60979, Japanese Unexamined Patent Application Publication No. 57-135, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 63-137906, Japanese Unexamined Patent Application Publication No.

2000-143727, Japanese Unexamined Patent Application Publication No. 2002-201217, International Publication No. 2007/046345, International Publication No. 2007/119829, International Publication No. 2009/001894, International Publication No. 2010/113950, and International Publication No. 2013/027850. In particular, homo-PTFEs disclosed in Japanese Unexamined Patent Application Publication No. 57-135, Japanese Unexamined Patent Application Publication No. 63-137906, Japanese Unexamined Patent Application Publication No. 2000-143727, Japanese Unexamined Patent Application Publication No. 2002-201217, International Publication No. 2007/046345, International Publication No. 2007/119829, and International Publication No. 2010/113950 are preferred from the viewpoint of high drawability.

The modified PTFE is constituted by TFE and a monomer other than TFE (hereafter referred to as a modifying monomer). Non-limiting examples of the modified PTFE include PTFEs homogeneously modified by the modifying monomer, PTFEs modified at the beginning of polymerization reaction, and PTFEs modified at the end of polymerization reaction. Examples of the modified PTFE that can be suitably used include modified PTFEs disclosed in Japanese Unexamined Patent Application Publication No. 60-42446, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 64-1711, Japanese Unexamined Patent Application Publication No. 2-261810, Japanese Unexamined Patent Application Publication No. 11-240917, Japanese Unexamined Patent Application Publication No. 11-240918, International Publication No. 2003/033555, International Publication No. 2005/061567, International Publication No. 2007/005361, International Publication No. 2011/055824, and International Publication No. 2013/027850. In particular, modified PTFEs disclosed in Japanese Unexamined Patent Application Publication No. 61-16907, Japanese Unexamined Patent Application Publication No. 62-104816, Japanese Unexamined Patent Application Publication No. 64-1711, Japanese Unexamined Patent Application Publication No. 11-240917, International Publication No. 2003/033555, International Publication No. 2005/061567, International Publication No. 2007/005361, and International Publication No. 2011/055824 are preferred from the viewpoint of high drawability.

The modified PTFE contains a TFE unit based on TFE and a modifying monomer unit based on the modifying monomer. The modifying monomer unit is a moiety in a molecular structure of the modified PTFE, the moiety being derived from the modifying monomer. The content of the modifying monomer unit in all monomer units of the modified PTFE is preferably 0.001 to 0.500 wt% and more preferably 0.01 to 0.30 wt%. The all monomer units are moieties derived from all monomers in a molecular structure of the modified PTFE.

The modifying monomer is not limited as long as the modifying monomer is copolymerizable with TFE. Examples of the modifying monomer include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ethers; and (perfluoroalkyl)ethylenes (PFAE) and ethylene. A single modifying monomer may be used or a plurality of modifying monomers may be used.

The perfluorovinyl ethers are not limited. For example, an unsaturated perfluoro-compound represented by general formula (1) below can be used.

$$CF_2=CF-ORf \cdots \qquad (1)$$

In the formula, Rf represents a perfluoro organic group.

In this specification, the perfluoro organic group is an organic group obtained by substituting all hydrogen atoms bonding to carbon atoms with fluorine atoms. The perfluoro organic group may contain ether oxygen.

An example of the perfluorovinyl ether is a perfluoro(alkyl vinyl ether) (PAVE) with Rf representing a perfluoroalkyl group having 1 to 10 carbon atoms in the general formula (1). The perfluoroalkyl group preferably has 1 to 5 carbon atoms. Examples of the perfluoroalkyl group in PAVE include a perfluoromethyl group, a perfluoroethyl group, a perfluoropropyl group, a perfluorobutyl group, a perfluoropentyl group, and a perfluorohexyl group. The PAVE is preferably perfluoro(propyl vinyl ether) (PPVE) or perfluoro(methyl vinyl ether) (PMVE).

Non-limiting examples of the (perfluoroalkyl)ethylenes (PFAE) include (perfluorobutyl)ethylene (PFBE) and (perfluorohexyl)ethylene (PFHE).

The modifying monomer in the modified PTFE is preferably at least one monomer selected from the group consisting of HFP, CTFE, VDF, PAVE, PFAE, and ethylene.

The content of the homo-PTFE in the fibrillatable PTFE is particularly preferably more than 50 wt% from the viewpoint of achieving ease of fibrillation and providing fibrils having a large fiber length.

The fibrillatable PTFE may contain the above-described components in a combined manner.

The content of the fibrillatable PTFE in the porous film is preferably more than 50 wt% from the viewpoint of maintaining the fibrous structure of the porous film.

(2-2) B component: non-fibril-forming non-melting-processable component

The non-fibril-forming non-melting-processable component is mainly unevenly distributed in the nodal portions as non-fibrous particles and has a function of suppressing fibrillation of the fibrillatable PTFE.

Examples of the non-fibril-forming non-melting-processable component include components having thermoplasticity, such as low-molecular-weight PTFEs; thermosetting resins; inorganic fillers; and mixtures of the foregoing.

The component having thermoplasticity preferably has a melting point of 320°C or higher and has as high a melt viscosity as possible. For example, the low-molecular-weight PTFE has a high melt viscosity and therefore can remain in the nodal portions even when processed at a temperature higher than or equal to the melting point. In this specification, the low-molecular-weight PTFE is a PTFE having a number-average molecular weight of 600,000 or less, a melting point of 320°C or higher and 335°C or lower, and a melt viscosity at 380°C of 100 Pa·s to $7.0 \times 10^5$ Pa·s (refer to Japanese Unexamined Patent Application Publication No. 10-147617).

Examples of the method for producing a low-molecular-weight PTFE include a method in which a high-molecular-weight PTFE powder (molding powder) obtained through suspension polymerization of TFE or a high-molecular-weight PTFE powder (fine powder) obtained through emulsion polymerization of TFE and a particular fluoride are thermally decomposed by causing a catalytic reaction at high temperature (refer to Japanese Unexamined Patent Application Publication No. 61-162503), a method in which the high-molecular-weight PTFE powder or a formed body is irradiated with ionizing radiation (refer to Japanese Unexamined Patent Application Publication No. 48-78252), and a method in which TFE is directly polymerized together with a chain transfer agent (refer to, e.g., International Publication No. 2004/050727, International Publication No. 2009/020187, and International Publication No. 2010/114033). The low-molecular-weight PTFE may be a homo-PTFE or a modified PTFE containing the above-described modifying monomer as in the case of the fibrillatable PTFE.

The low-molecular-weight PTFE has no fibrillability. The presence or absence of fibrillability can be judged by the above-described method. For the low-molecular-weight PTFE, an unfired formed body obtained through paste extrusion substantially does not have strength or elongation, and, for example, has an elongation of 0% and is broken when stretched.

The melt viscosity of the low-molecular-weight PTFE is not limited. The melt viscosity at 380°C is preferably 1000 Pa·s or more, more preferably 5000 Pa·s or more, and further preferably 10000 Pa·s or more. At a high melt viscosity, even if the non-fibril-forming hot-melt-processable component serving as a c component is melted during production of the porous film, the non-fibril-forming non-melting-processable component can remain in the nodal portions, which can suppress the fibrillation.

Examples of the thermosetting resin include epoxy resin, silicone resin, polyester resin, polyurethane resin, polyimide resin, phenolic resin, and mixtures of the foregoing resins. The thermosetting resin is desirably an uncured resin dispersed in water from the viewpoint of workability of co-coagulation described later. Each of these thermosetting resins is commercially available.

Examples of the inorganic filler include talc, mica, calcium silicate, glass fiber, calcium carbonate, magnesium carbonate, carbon fiber, barium sulfate, calcium sulfate, and mixtures of the foregoing. In particular, talc is preferably used from the viewpoint of specific gravity and affinity for a fibrillatable high-molecular-weight PTFE. The inorganic filler preferably has a particle size of 3 um or more and 20 um or less from the viewpoint of formation of a stable dispersion body during production of the porous film. The particle size is an average particle size measured by a laser diffraction/scattering method. Each of these inorganic fillers is commercially available.

The non-fibril-forming non-melting-processable component may contain the above-described components in a combined manner.

The content of the non-fibril-forming non-melting-processable component in the porous film is preferably 1 wt% or more and 50 wt% or less. When the content of the non-fibril-forming non-melting-processable component is 50 wt% or less, the fibrous structure of the porous film is easily maintained. The content of the non-fibril-forming non-melting-processable component is preferably 20 wt% or more and 40 wt% or less and more preferably 30 wt%. When the content is 20 wt% or more and 40 wt% or less, the fibrillation of the fibrillatable PTFE can be more effectively suppressed.

(2-3) C component: non-fibril-forming hot-melt-processable component having melting point of lower than 320°C

The non-fibril-forming hot-melt-processable component having a melting point of lower than 320°C (hereafter also referred to as a non-fibril-forming hot-melt-processable component) has flowability when melted. Therefore, the non-fibril-forming hot-melt-processable component can be melted during production (drawing) of the porous film and cured in the nodal portions. This increases the strength of the whole porous film and thus can suppress the deterioration of filter performance even if the porous film is compressed, for example, in the downstream processes.

The non-fibril-forming hot-melt-processable component preferably has a melt viscosity of less than 10000 Pa·s at 380°C. The melting point of the non-fibril-forming hot-melt-processable component is a temperature at a peak top of a heat-of-fusion curve obtained when the component is heated to a temperature higher than or equal to the melting point at a heating rate of 10 °C/min to be completely melted once, cooled to a temperature lower than or equal to the melting point at 10 °C/min, and then heated again at 10 °C/min using a differential scanning calorimeter (DSC).

Examples of the non-fibril-forming hot-melt-processable component include components that sufficiently exhibit meltability and flowability at a drawing temperature during production of the porous film, such as heat-meltable fluoropolymer, polystyrene resin, polyethylene terephthalate (PET) resin, polyester resin, polyamide resin, and mixtures of the foregoing resins. In particular, a heat-meltable fluoropolymer is preferred from the viewpoint of high heat resistance at a drawing temperature during production of the porous film and high chemical resistance. The heat-meltable fluoropolymer is a fluoropolymer having a copolymer unit derived from at least one fluorinated ethylenically unsaturated monomer, preferably two or more fluorinated ethylenically unsaturated monomers, represented by general formula (2) below.

$$RCF=CR_2 \cdots \qquad (2)$$

(In the formula, each R independently selected from H, F, Cl, alkyl having 1 to 8 carbon atoms, aryl having 6 to 8 carbon atoms, cyclic alkyl having 3 to 10 carbon atoms, and perfluoroalkyl having 1 to 8 carbon atoms. In this case, all R may be the same, any two R may be the same and the remaining one R may be different from the two R, or all R may be different from each other.)

Non-limiting useful examples of the compound represented by the general formula (2) include perfluoroolefins such as fluoroethylene, VDF, trifluoroethylene, TFE, and HFP; chlorofluoroolefins such as CTFE and dichlorodifluoroethylene; (perfluoroalkyl)ethylenes such as PFBE and PFHE; perfluoro-1,3-dioxole; and mixtures of the foregoing.

The fluoropolymer may also include a copolymer derived from copolymerization of at least one monomer represented by the general formula (2) and at least one copolymerizable comonomer represented by the above general formula (1) and/or general formula (3) below.

$$R_2C=CR_2 \cdots \qquad (3)$$

(In the formula, each R independently selected from H, Cl, an alkyl group having 1 to 8 carbon atoms, an aryl group having 6 to 8 carbon atoms, and a cyclic alkyl group having 3 to 10 carbon atoms. In this case, all R may be the same, any two or more R may be the same and the remaining R may be different from the two or more R, or all R may be different from each other. If the remaining R are plural R, the plural R may be different from each other.)

A useful example of the compound represented by the general formula (1) is a perfluoro(alkyl vinyl ether) (PAVE). The PAVE is preferably perfluoro(propyl vinyl ether) (PPVE) or perfluoro(methyl vinyl ether) (PMVE).

Useful examples of the compound represented by the general formula (3) include ethylene and propylene.

Specific examples of the fluoropolymer include polyfluoroethylene derived from polymerization of fluoroethylene, polyvinylidene fluoride (PVDF) derived from polymerization of vinylidene fluoride (VDF), polychlorotrifluoroethylene (PCTFE) derived from polymerization of chlorotrifluoroethylene (CTFE), fluoropolymers derived from copolymerization of two or more different monomers represented by the general formula (2), and fluoropolymers derived from copolymerization of at least one monomer represented by the general formula (2) and at least one monomer represented by the general formula (1) and/or at least one monomer represented by the general formula (3).

Examples of the fluoropolymer include polymers having a copolymer unit derived from VDF and hexafluoropropylene (HFP) and polymers derived from TFE and at least one copolymerizable comonomer (at least 3 wt%) other than TFE. Examples of the latter fluoropolymer include TFE/PAVE copolymers (PFA), TFE/PAVE/CTFE copolymers, TFE/HFP copolymers (FEP), TFE/ethylene copolymers (ETFE), TFE/HFP/ethylene copolymers (EFEP), TFE/VDF copolymers, TFE/VDF/HFP copolymers, TFE/VDF/CTFE copolymers, and mixtures of the foregoing copolymers.

The non-fibril-forming hot-melt-processable component may contain the above-described components in a combined manner.

The content of the non-fibril-forming hot-melt-processable component in the porous film is preferably 0.1 wt% or more and less than 20 wt%. When the content is less than 20 wt%, the non-fibril-forming hot-melt-processable component is dispersed in portions other than the nodal portions in the porous film, which suppresses an increase in the pressure loss of the porous film. Furthermore, when the content is less than 20 wt%, drawing is easily performed at a high area stretch magnification of 40 times or more, which will be described later. When the content of the non-fibril-forming hot-melt-processable component in the porous film is 0.1 wt% or more, the deterioration of filter performance of the porous film is sufficiently suppressed even if a compressive force or the like is exerted in the downstream processes. The content of the non-fibril-forming hot-melt-processable component in the porous film is preferably 15 wt% or less and more preferably 10 wt% or less. The content of the non-fibril-forming hot-melt-processable component in the porous film is preferably 0.5 wt% or more from the viewpoint of ensuring the strength of the porous film. The content is particularly preferably about 5 wt%.

The content of the non-fibril-forming hot-melt-processable component is preferably 10 wt% or less to satisfactorily perform drawing at an area stretch magnification of 40 times or more and 800 times or less.

In the porous film formed of the above-described three components, the fibrils are mainly formed of the A component and the nodal portions are formed of the A to C components. Such nodal portions are formed in the porous film so as to have a relatively large size, which allows forming of a thick porous film. The nodal portions contain the non-fibril-forming hot-melt-processable component and thus are relatively hard, and serve as pillars that support the porous film in the thickness direction. Therefore, the deterioration of filter performance of the porous film can be suppressed even if a compressive force or the like is exerted in the thickness direction in the downstream processes such as stacking of air-permeable supporting members and pleating described later.

(2-4) Other properties of porous film

The thickness of the first fluororesin porous film 31 is 10 um or more and preferably 30 um or more from the viewpoint of increasing the dust-holding capacity and the collection efficiency. The upper limit of the thickness of the first fluororesin porous film 31 is not limited, and may be, for example, 100 um. For example, when the second fluororesin porous film 32 is formed of the above-described three components, the thickness of the second fluororesin porous film 32 is preferably more than 5 um and more preferably more than 40 um. The upper limit of the thickness of the second fluororesin porous film 32 is not limited, and may be, for example, 100 um. The thickness is determined by stacking five layers to be measured, measuring the total thickness of the five layers, and dividing the total thickness by 5.

The first fluororesin porous film 31 has a filling factor of 2% or more and 9% or less; and the second fluororesin porous film 32 has a filling factor of 2% or more and 9% or less and more preferably 3% or more and 8% or less, which is determined from the following formula. The first fluororesin porous film 31 has a smaller filling factor than the second fluororesin porous film 32.

$$\text{Filling factor (\%)} = \text{(basis weight of porous film)}/\text{(thickness of porous film)}/\text{(specific gravity of raw material)} \times 100$$

The first fluororesin porous film 31 has a fiber diameter (average fiber diameter) of 60 nm or more and 200 nm or less, and the second fluororesin porous film 32 has a fiber diameter (average fiber diameter) of 60 nm or more and 200 nm or less. The first fluororesin porous film 31 has a larger fiber diameter than the second fluororesin porous film 32.

In the case where the fluororesin porous film has the above-described thickness, filling factor, and fiber diameter, the collection efficiency sometimes decreases over time when liquid particles are collected. Therefore, the temporal change in permeability of polyalphaolefin (PAO) particles (liquid particles) is preferably evaluated.

The above-described fluororesin porous film is not limited, and may be produced with reference to, for example, the production method described in Japanese Unexamined Patent Application Publication No. 2017-159281.

(3) Air-permeable supporting member

The upstream air-permeable supporting member 21 is disposed on the upstream side with respect to the first fluororesin porous film 31 so as to support the first fluororesin porous film 31.

The downstream air-permeable supporting member 22 is disposed on the downstream side with respect to the second fluororesin porous film 32 so as to support the second fluororesin porous film 32. The downstream air-permeable supporting member 22 is disposed so as to constitute the most downstream layer of the air filter medium.

Non-limiting examples of the material and structure of the upstream air-permeable supporting member 21 and the downstream air-permeable supporting member 22 include nonwoven fabric, woven fabric, metal mesh, and resin net. In particular, a nonwoven fabric having heat fusibility is preferred from the viewpoint of strength, collectability, flexibility, and workability. The nonwoven fabric is preferably a nonwoven fabric in which some or all of constituent fibers have a core/sheath structure, a two-layer nonwoven fabric including a fiber layer formed of a low-melting-point material and a fiber layer formed of a high-melting-point material, or a nonwoven fabric whose surface is coated with a heat fusible resin. Such a nonwoven fabric is, for example, a spun-bonded nonwoven fabric. The nonwoven fabric having a core/sheath structure is preferably a nonwoven fabric in which the core component has a higher melting point than the sheath component. Examples of the combination of materials for the core/sheath include PET/PE and high-melting-point polyester/low-melting-point polyester. Examples of the combination of the low-melting-point material/high-melting-point material for the two-layer nonwoven fabric include PE/PET, PP/PET, PBT/PET, and low-melting-point PET/high-melting-point PET. Examples of the nonwoven fabric whose surface is coated with a heat fusible resin include a PET nonwoven fabric whose surface is coated with EVA (ethylene-vinyl acetate copolymer resin) and a PET nonwoven fabric whose surface is coated with an olefin resin.

Non-limiting examples of the material for the nonwoven fabric include polyolefins (e.g., PE and PP), polyamides, polyesters (e.g., PET), aromatic polyamides, and composite materials of the foregoing.

The upstream air-permeable supporting member 21 can be joined to the first fluororesin porous film 31 by using an anchor effect due to partial melting of the upstream air-permeable supporting member 21 through heating or due to melting of a hot-melt resin, or by using adhesion of a reactive adhesive or the like. The downstream air-permeable supporting member 22 can also be joined to the second fluororesin porous film 32 in the same manner.

The upstream air-permeable supporting member 21 and the downstream air-permeable supporting member 22 may be of the same type or of different types.

The upstream air-permeable supporting member 21 and the downstream air-permeable supporting member 22 each have a pressure loss, a collection efficiency, and a dust-holding capacity much lower than those of the above-described porous film. The pressure loss, the collection efficiency, and the dust-holding capacity may be values considered to be substantially zero.

The pressure loss of each of the upstream air-permeable supporting member 21 and the downstream air-permeable supporting member 22 is, for example, preferably 10 Pa or less, more preferably 5 Pa or less, and further preferably 1 Pa or less.

The collection efficiency of NaCl particles having a particle size of 0.3 um in each of the upstream air-permeable supporting member 21 and the downstream air-permeable supporting member 22 may be, for example, a value considered to be substantially zero or about zero.

The thickness of each of the upstream air-permeable supporting member 21 and the downstream air-permeable supporting member 22 is, for example, preferably 0.3 mm or less and more preferably 0.25 mm or less.

The basis weight of each of the upstream air-permeable supporting member 21 and the downstream air-permeable supporting member 22 is, for example, preferably 20 g/m$^2$ or more and 50 g/m$^2$ or less.

(4) Pre-collection member

The pre-collection member 10 is disposed on the upstream side with respect to the first fluororesin porous film 31 and can collect a part of dust in the air flow.

For the pre-collection member 10, the pressure loss obtained when air is passed through the pre-collection member 10 at a flow velocity of 5.3 cm/s is preferably 5 Pa or more and less than 55 Pa and more preferably 15 Pa or more and less than 45 Pa from the viewpoint of reducing the pressure loss of the whole air filter medium.

The collection efficiency of NaCl particles having a particle size of 0.3 um in the pre-collection member 10 is preferably 15% or more and less than 85% and more preferably 30% or more and less than 75%.

The thickness of the pre-collection member 10 is preferably 0.8 mm or less and more preferably 0.7 mm or less and may be less than 0.4 mm from the viewpoint of ease of a folding process in which the air filter medium is pleated. The thickness of the pre-collection member 10 is not limited, and may be, for example, 0.1 mm or more.

The average fiber diameter of the pre-collection member 10 is preferably 0.8 um or more and less than 2.0 um.

The basis weight of the pre-collection member 10 is not limited, and may be, for example, 10 g/m$^2$ or more and 70 g/m$^2$ or less and is preferably 30 g/m$^2$ or more and 67 g/m$^2$ or less.

Such a pre-collection member 10 is not limited and may be a glass fiber filter medium or may be a nonwoven fabric or a fiber layer structural body formed of a fiber material produced by one of a melt-blowing process, an electrospinning process, a sea-island process, and a hybrid process of the foregoing. The hybrid process includes, for example, a melt spinning process or an electret blowing process. The sea-island process is a process in which, for example, when a fiber is produced by performing discharge from a plurality of discharge outlets, different raw materials are used for different discharge paths and one raw material constitutes a sea portion and the other raw material constitutes island portions so that the crosssection of the fiber has a sea-island structure. Herein, two polymers or a plurality of polymers for sea and islands are spun and the polymer for sea is melted in the downstream process to leave the island portions, thereby producing a fiber. The combination of the different raw materials for different discharge paths allows adjustment of, for example, bulk density and stretchability. In the melt-blowing process, yarn is formed by discharging a molten polymer from a nozzle using an extruder while blowing heated air along the nozzle. By adjusting, for example, the amount of polymer discharged from the nozzle per unit time and the blowing rate of heated air, a yarn having a smaller diameter can be obtained. The physical properties of the yarn can also be changed by adjusting the melt viscosity of a polymer used. Examples of the material used when the pre-collection member 10 is produced by one of a melt-blowing process, an electrospinning process, a sea-island process, and a hybrid process of the foregoing include polyethylene (PE), polypropylene (PP), polyethylene terephthalate (PET), polybutylene terephthalate (PBT), polyamide (PA), polyacrylonitrile (PAN), polyvinylidene fluoride (PVdF), polyvinyl alcohol (PVA), polyurethane (PU), and mixtures of the foregoing.

The pre-collection member 10 is used together with the first fluororesin porous film 31 and the second fluororesin porous film 32. To suppress formation of holes in the first fluororesin porous film 31 and the second fluororesin porous film 32 caused by generation of sparks due to static electricity, the pre-collection member 10 is preferably constituted by a glass fiber filter medium, which is a material that is not easily chargeable. A glass fiber filter medium having the above physical properties may be produced, or a commercially available glass fiber filter medium may be obtained.

(5) Examples of applications

The air filter medium is used, for example, in the following applications:

fields of, for example, ULPA filters (ultra low penetration air filters) (for producing semiconductors), HEPA filters (for hospitals and for producing semiconductors), cylindrical cartridge filters (for industrial use), bag filters (for industrial use), heatresistant bag filters (for treating exhaust gas), heatresistant pleated filters (for treating exhaust gas), SINBRAN (registered trademark) filters (for industrial use), catalyst filters (for treating exhaust gas), adsorbentincluding filters (for installation in HDD), adsorbentincluding vent filters (for installation in HDD), vent filters (e.g., for installation in HDD), filters for vacuum cleaners (for vacuum cleaners), general-purpose multilayered felt materials, cartridge filters for gas turbines (interchangeable components for gas turbines), and cooling filters (for casings of electronic devices);
fields of materials for freeze-drying such as freeze-drying bottles, automobile ventilation materials for electronic circuits and lamps, bottle applications such as bottle caps, protective ventilation for electronic devices, and ventilation/internal pressure regulation such as medical ventilation; and
liquid filtration fields of, for example, semiconductor liquid filtration filters (for producing semiconductors), hydrophilic filters (for producing semiconductors), filters for chemicals (for treating chemical solutions), filters for pure water production lines (for producing pure water), and backwash liquid filtration filters (for treating industrial wastewater).

Even if the collection target is droplet particles, the air filter medium is preferably used in a medical clean room in which droplet particles such as oil mist are the collection target or in a clean room of a pharmaceutical factory from the viewpoint of suppressing a decrease in collection efficiency during use.

(6) Filter pack

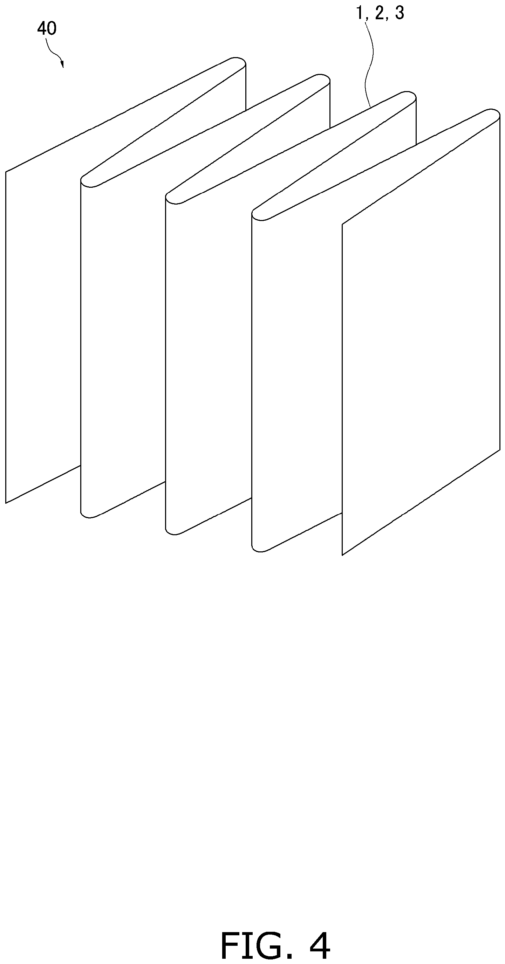

Next, a filter pack according to this embodiment will be described with reference to Fig. 4.
Fig. 4 is an external perspective view of a filter pack 40 according to this embodiment.
The filter pack 40 includes the above-described air filter medium (e.g., the air filter media 1 to 3). The air filter medium of the filter pack 40 is a filter medium that has been processed so as to have a zigzag shape in which mountain folds and valley folds are alternately repeated (pleating). The pleating can be performed using, for example, a rotary folding machine. The folding width of the filter medium is not limited, and is, for example, 25 mm or more and 280 mm or less. By performing pleating, the folding area of the filter medium can be increased in the case where the filter pack 40 is used for an air filter unit. Thus, an air filter unit having high collection efficiency can be obtained.
The filter pack 40 may further include, in addition to the filter medium, spacers (not illustrated) for keeping pleat spacing when used for an air filter unit. The material for the spacers is not limited, and is preferably a hot-melt resin.

(7) Air filter unit

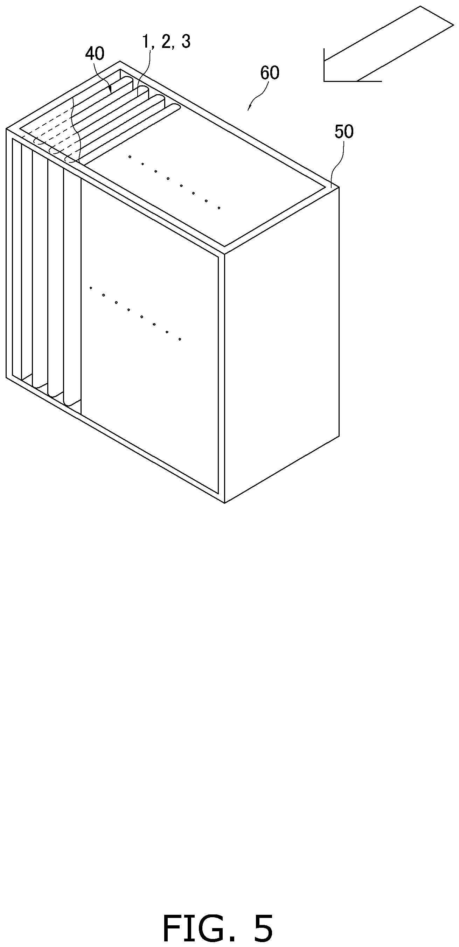

Next, an air filter unit 60 will be described with reference to Fig. 5.
Fig. 5 is an external perspective view of an air filter unit 60 according to this embodiment.
The air filter unit 60 includes the above-described air filter medium or filter pack and a frame body 50 that holds the air filter medium or the filter pack. In other words, the air filter unit may be produced such that a filter medium not subjected to mountain folds or valley folds is held by the frame body or such that the filter pack 40 is held by the frame body 50. The air filter unit 60 illustrated in Fig. 5 is produced using the filter pack 40 and the frame body 50.
The frame body 50 is produced by, for example, assembling boards or forming a resin, and the filter pack 40 and the frame body 50 are preferably sealed with each other using a sealer. The sealer is used to prevent leakage between the filter pack 40 and the frame body 50 and is formed of, for example, a resin such as an epoxy resin, an acrylic resin, or a urethane resin.
The air filter unit 60 including the filter pack 40 and the frame body 50 may be a mini-pleat air filter unit in which a single filter pack 40 extending in a flat-plate form is held so as to be accommodated inside the frame body 50 or may be a V-bank air filter unit or a single header air filter unit in which a plurality of filter packs extending in a flat-plate form are arranged and held in the frame body.

EXAMPLES

Hereafter, the present disclosure will be specifically described based on Reference Examples, an Example and Comparative Examples. Herein, Reference Examples 1, 2 and 3 are given for reference purposes only and do not form part of the claimed subject matter.

(Reference Example 1)

An air filter medium having a structure illustrated in Fig. 1 was provided as an air filter medium in Example 1. Specifically, the upstream air-permeable supporting member 21 and the downstream air-permeable supporting member 22 were each a spun-bonded nonwoven fabric (average fiber diameter 20 $\mu$m, basis weight 40 g/m$^2$, thickness 0.2 mm) formed of fibers having a core/sheath structure in which PET was used for the core and PE was used for the sheath. The first fluororesin porous film 31 and the second fluororesin porous film 32 each had a thickness of 55.0 um, a filling factor of 4.0%, and an average fiber diameter of 105 nm. By stacking these films and members, an air filter medium in Reference Example 1 was obtained.

(Reference Example 2)

An air filter medium having a structure illustrated in Fig. 2 was provided as an air filter medium in Reference Example 2. Specifically, the pre-collection member 10 was a melt-blown nonwoven fabric (basis weight 30 g/m$^2$, thickness 0.25 mm) formed of PP and having an average fiber diameter of 1.6 um. The downstream air-permeable supporting member 22 was a spun-bonded nonwoven fabric (average fiber diameter 20 $\mu$m, basis weight 40 g/m$^2$, thickness 0.2 mm) formed of fibers having a core/sheath structure in which PET was used for the core and PE was used for the sheath. The first fluororesin porous film 31 and the second fluororesin porous film 32 each had a thickness of 50.0 $\mu$m, a filling factor of 4.0%, and an average fiber diameter of 100 nm. By stacking these films and members, an air filter medium in reference Example 2 was obtained.

(Example 1)

An air filter medium having a structure illustrated in Fig. 1 was provided as an air filter medium in Example 1. Specifically, the upstream air-permeable supporting member 21 and the downstream air-permeable supporting member 22 were each a spun-bonded nonwoven fabric (average fiber diameter 20 $\mu$m, basis weight 40 g/m$^2$, thickness 0.2 mm) formed of fibers having a core/sheath structure in which PET was used for the core and PE was used for the sheath. The first fluororesin porous film 31 had a thickness of 38.6 um, a filling factor of 4.2%, and an average fiber diameter of 150 nm. The second fluororesin porous film 32 had a thickness of 8.0 $\mu$m, a filling factor of 8.0%, and an average fiber diameter of 70 nm. By stacking these films and members, an air filter medium in Example 1 was obtained.

(Reference Example 3)

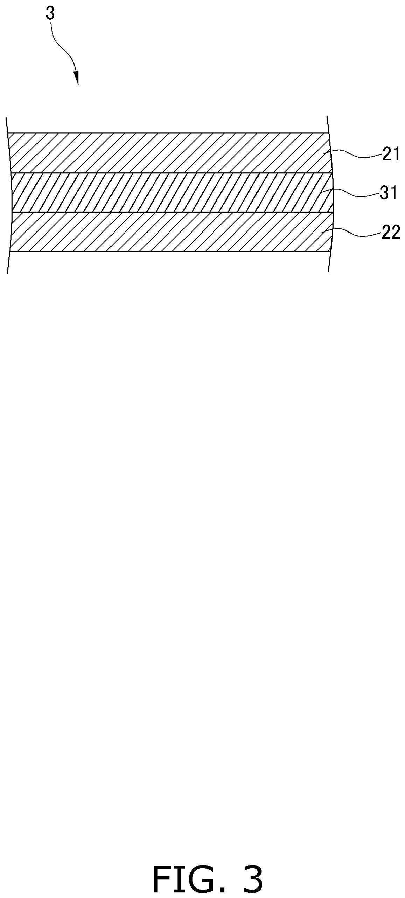

An air filter medium having a structure illustrated in Fig. 3 was provided as an air filter medium in Reference Example 3. Specifically, the upstream air-permeable supporting member 21 and the downstream air-permeable supporting member 22 were each a spun-bonded nonwoven fabric (average fiber diameter 20 $\mu$m, basis weight 40 g/m$^2$, thickness 0.2 mm) formed of fibers having a core/sheath structure in which PET was used for the core and PE was used for the sheath. The first fluororesin porous film 31 had a thickness of 38.6 um, a filling factor of 4.2%, and an average fiber diameter of 150 nm. By stacking the film and members, an air filter medium in Reference Example 3 was obtained.

(Comparative Example 1)

An air filter medium obtained by further disposing the pre-collection member 10 on the upstream side of the air filter medium having a structure illustrated in Fig. 3 was provided as an air filter medium in Comparative Example 1. Specifically, the pre-collection member 10 was a melt-blown nonwoven fabric (basis weight 30 g/m$^2$, thickness 0.25 mm) formed of PP and having an average fiber diameter of 1.6 um. The upstream air-permeable supporting member 21 and the downstream air-permeable supporting member 22 were each a spun-bonded nonwoven fabric (average fiber diameter 20 $\mu$m, basis weight 40 g/m$^2$, thickness 0.2 mm) formed of fibers having a core/sheath structure in which PET was used for the core and PE was used for the sheath. The first fluororesin porous film 31 had a thickness of 8.0 $\mu$m, a filling factor of 8.0%, and an average fiber diameter of 70 nm. By stacking the film and members, an air filter medium in Comparative Example 1 was obtained.

(Comparative Example 2)

An air filter medium having a structure illustrated in Fig. 1 was provided as an air filter medium in Comparative Example 2. Specifically, the upstream air-permeable supporting member 21 and the downstream air-permeable supporting member 22 were each a spun-bonded nonwoven fabric (average fiber diameter 20 $\mu$m, basis weight 40 g/m$^2$, thickness 0.2 mm) formed of fibers having a core/sheath structure in which PET was used for the core and PE was used for the sheath. The first fluororesin porous film 31 had a thickness of 4.0 $\mu$m, a filling factor of 10.0%, and an average fiber diameter of 400 nm. The second fluororesin porous film 32 had a thickness of 1.0 um, a filling factor of 10.0%, and an average fiber diameter of 40 nm. By stacking these films and members, an air filter medium in Comparative Example 2 was obtained.

The physical properties measured in Reference Examples, the Example and Comparative Examples are as follows.

(Pressure loss)

The measurement sample of the air filter medium was set to a filter holder having a diameter of 100 mm. The pressure on the inlet side was increased using a compressor, and the flow velocity of air that passed through the air filter medium was adjusted to 5.3 cm/s using a velocimeter. The pressure loss at this time was measured using a manometer.

(Collection efficiency of NaCl particles having particle size of 0.3 $\mu$m)

NaCl particles generated with an atomizer in conformity to the NaCl aerosol generating method (pressurized atomizing method) in JIS B9928 Appendix 5 (specification) were classified using an electrostatic classifier (manufactured by TSI Incorporated) into particles having a particle size of 0.3 um. The charge on the particles was neutralized using americium-241. Then, the flow velocity at which the particles passed through the air filter medium was adjusted to 5.3 cm/s. The numbers of particles before and after passage through the filter medium serving as a measurement sample were determined using a particle counter (CNC manufactured by TSI Incorporated), and the collection efficiency was calculated from the following formula. The initial value of the collection efficiency was measured with an unused air filter medium.

$$\text{Collection efficiency (\%) = (CO/CI)} \times 100$$

CO: Number of 0.3 $\mu$m NaCl particles collected by the measurement sample
CI: Number of 0.3 um NaCl particles supplied to the measurement sample
(PF of NaCl particles having particle size of 0.3 um)

With NaCl particles having a particle size of 0.3 um, PF was determined from the following formula using the pressure loss and collection efficiency (the collection efficiency of NaCl particles having a particle size of 0.3 um) of the filter medium.

$$PF = \{-\log((100 - \text{collection efficiency}$$
$$(\%))/100)\}/(\text{pressure loss (Pa)}/1000)$$

(Dust-holding capacity of polyalphaolefin particles)

The dust-holding capacity was evaluated by a pressure loss-increase test in which polyalphaolefin (PAO) particles (liquid particles) were passed through the filter medium. That is, the pressure loss caused when air containing PAO particles was continuously passed through a sample filter medium having an effective filtration area of 50 cm$^2$ at a flow velocity of 5.3 cm/s was measured over time using a differential pressure gauge (U-shaped manometer) to determine a dust-holding capacity (g/m$^2$) that was a weight of PAO particles held in the filter medium per unit area of the filter medium when the pressure loss increased by 250 Pa. The PAO particles were PAO particles (number median diameter: 0.25 um) generated with a Laskin nozzle, and the concentration of the PAO particles was set to about 1,000,000 to 6,000,000 /cm$^3$.

HEPA filter media have no definition of dust-holding capacity, and the initial pressure loss of a filter is generally about 250 Pa or less for HEPA units. The recommended timing at which the filter needs to be replaced is generally a timing at which the pressure loss reaches more than twice the initial pressure loss of the filter. The initial pressure loss of typical HEPA glass filter media is about 250 to 300 Pa. Therefore, the above test for evaluating the dust-holding capacity of the air filter medium was ended when the pressure loss increased by 250 Pa.

(Dust-holding capacity of NaCl particles)

The dust-holding capacity was evaluated by a pressure loss-increase test in which NaCl particles were passed through the filter medium. That is, the pressure loss caused when air containing NaCl particles was continuously passed through a sample filter medium having an effective filtration area of 50 cm$^2$ at a flow velocity of 5.3 cm/s was measured over time using a differential pressure gauge (U-shaped manometer) to determine a dust-holding capacity (g/m$^2$) that was a weight of NaCl particles held in the filter medium per unit area of the filter medium when the pressure loss increased by 250 Pa. The NaCl particles were NaCl particles (number median diameter: 0.1 um) generated with an atomizer, and the concentration of the NaCl particles was set to about 5,000,000 to 7,000,000 /cm$^3$.

As in the case of the measurement of the dust-holding capacity of polyalphaolefin particles, the above test for evaluating the dust-holding capacity of the filter medium was ended when the pressure loss increased by 250 Pa.

(Thickness of porous film)

The film thickness of one layer was determined by stacking five layers to be measured, measuring the total thickness of the five layers using a thickness meter (1D-110MH, manufactured by Mitutoyo Corporation), and dividing the total thickness by 5.

(Filling factor of porous film)

The filling factor of the porous film was determined from the following formula.

$$\texttt{Filling factor (\%) = (basis weight of porous}$$
$$\texttt{film)/(thickness of porous film)/(specific gravity of raw}$$
$$\texttt{material)} \times \texttt{100}$$

Herein, the basis weight was calculated by dividing the mass (g) of a rectangular cut sample having a size of 4.0 cm $\times$ 12.0 cm, which was measured with a precision balance, by the area (0.0048 m$^2$).

(Fiber diameter of porous film)

The fiber diameter (average fiber diameter) of the porous film was measured as follows. In an electron micrograph taken at a magnification of 5000 times using a scanning electron microscope (trade name SU8020 manufactured by Hitachi, Ltd.), a freely selected 25 um $\times$ 20 um region was observed. A vertical line and a horizontal line were drawn so as to be orthogonal to each other, and the diameter of all fibers that intersected each straight line was measured with a ruler. The scale of the measured diameter was converted to determine the fiber diameter (nm). Subsequently, the cumulative frequency distribution of the determined fiber diameters was plotted on a lognormal scale on a log-probability paper, with the horizontal axis representing a fiber diameter and the vertical axis representing a cumulative frequency. A value at a cumulative frequency of 50% was defined as an average fiber diameter (median diameter).

(Permeability and permeability ratio of polyalphaolefin particles)

The permeability was measured during the pressure loss-increase test in which polyalphaolefin (PAO) particles (liquid particles) were passed through the filter medium. That is, when air containing PAO particles was continuously passed through a sample filter medium having an effective filtration area of 50 cm$^2$ at a flow velocity of 5.3 cm/s, the concentration of the PAO particles on the downstream side of the sample filter medium about 30 seconds after the start of air passage was measured as an initial value. At the same time, the pressure loss of the filter medium was measured over time using a differential pressure gauge (U-shaped manometer). When the pressure loss increased by 250 Pa, the concentration of the PAO particles on the downstream side of the sample filter medium was measured as a final value. The initial collection efficiency (initial permeability) and the final collection efficiency (final permeability) were determined from the concentration on the upstream side of the sample filter medium.

The PAO particles were PAO particles (number median diameter: 0.25 um) generated with a Laskin nozzle, and the concentration of the PAO particles was set to about 1,000,000 to 6,000,000 /cm$^3$.

In each of Examples and Comparative Examples, the permeability ratio (final permeability)/(initial permeability) of NaCl particles was obviously lower than 1. Therefore, the measurement was not performed. The permeability ratio of NaCl particles (solid particles) is determined as follows. That is, when air containing NaCl particles is continuously passed through a sample filter medium having an effective filtration area of 50 cm$^2$ at a flow velocity of 5.3 cm/s, the concentration of the NaCl particles on the downstream side of the sample filter medium about 30 seconds after the start of air passage is measured as an initial value. At the same time, the pressure loss of the filter medium is measured over time using a differential pressure gauge (U-shaped manometer). When the pressure loss has increased by 250 Pa, the concentration of the NaCl particles on the downstream side of the sample filter medium is measured as a final value. The initial collection efficiency (initial permeability) and the final collection efficiency (final permeability) can be determined from the concentration on the upstream side of the sample filter medium. In this case, the NaCl particles are NaCl particles (number median diameter: 0.1 um) generated with an atomizer, and the concentration of the NaCl particles is set to about 5,000,000 to 7,000,000 /cm$^3$.

Table 1 below shows the physical properties of the air filter medium (before production of a filter pack or an air filter unit) and the physical properties of the porous film in each of Reference Examples 1, 2 and 3, Example 1 and Comparative Examples 1 and 2.

Table 1

| | | Ref. Example 1 | Ref. Example 2 | Example 1 | Ref. Example 3 | Comparative Example 1 | Comparative Example 2 |
|---|---|---|---|---|---|---|---|
| Pressure loss of air filter medium | Initial value (Pa) | 131 | 103 | 150 | 56 | 103 | 159 |
| | Final value (Pa) | 381 | 353 | 400 | 306 | 353 | 409 |
| | Increment (Pa) | 250 | 250 | 250 | 250 | 250 | 250 |
| Permeability and permeability ratio of air filter medium (load with PAO) | Initial permeability | 2.5E-05 | 8.7E-05 | 1.2E-06 | 1.2E-02 | 8.8E-05 | 1.3E-05 |
| | Final permeability | 5.3E-05 | 1.9E-04 | 2.5E-06 | 2.4E-02 | 5.2E-04 | 1.3E-04 |
| | Permeability ratio (final permeability/ initial permeability) | 2.1 | 2.2 | 2.1 | 1.9 | 5.9 | 9.7 |
| PAO dust-holding capacity of air filter medium (PAO, increase by 250 Pa) (g/m$^2$) | | 25.0 | 77.0 | 29.0 | 27.6 | 8.0 | 19.4 |
| Initial value of collection efficiency of air filter medium (NaCl, 0.3 $\mu$m) (%) | | 99.9975 | 99.9913 | 99.9999 | 98.7692 | 99.9912 | 99.9987 |
| Initial value of PF of air filter medium (NaCl, 0.3 $\mu$m) | | 35.1 | 39.4 | 39.5 | 34.1 | 39.4 | 30.7 |

(continued)

|  |  | Ref. Example 1 | Ref. Example 2 | Example 1 | Ref. Example 3 | Comparative Example 1 | Comparative Example 2 |
|---|---|---|---|---|---|---|---|
| First fluororesin porous film | Thickness of porous film ($\mu$m) | 55.0 | 50.0 | 38.6 | 38.6 | 8.0 | 4 |
|  | Filling factor of porous film (%) | 4.0 | 4.0 | 4.2 | 4.2 | 8.0 | $\approx 10$ |
|  | Fiber diameter of porous film (nm) | 105 | 100 | 150 | 150 | 70 | 400 |
| Second fluororesin porous film | Thickness of porous film ($\mu$m) | 55.0 | 50.0 | 8.0 |  |  | 1 |
|  | Filling factor of porous film (%) | 4.0 | 4.0 | 8.0 |  |  | $\approx 10$ |
|  | Fiber diameter of porous film (nm) | 105 | 100 | 70 |  |  | 40 |

Reference Signs List

1    air filter medium
2    air filter medium
3    air filter medium
10   pre-collection member
21   upstream air-permeable supporting member
22   downstream air-permeable supporting member
31   first fluororesin porous film
32   second fluororesin porous film
40   filter pack
50   frame body
60   air filter unit

Citation List

Patent Literature

PTL 1: Japanese Unexamined Patent Application Publication No. 2017-64713

**Claims**

1.    An air filter medium comprising:

a first fluororesin porous film (31) having a thickness of 10 um or more, a filling factor of 2% or more and 9% or less, and a fiber diameter of 60 nm or more and 200 nm or less, and a second fluororesin porous film (32), disposed on a downstream side of an air flow with respect to the first fluororesin porous film, having a filling factor of 2% or more and 9% or less, and a fiber diameter of 60 nm or more and 200 nm or less,

wherein the first fluororesin porous film (31) has a larger fiber diameter than the second fluororesin porous film (32), and

wherein the first fluororesin porous film (31) has a smaller filling factor than the second fluororesin porous film (32), wherein the filling factor is defined by the following formula:

```
Filling factor (%) = (basis weight of porous
film)/(thickness of porous film)/(specific gravity of
raw material) × 100
```

wherein a PAO permeability ratio of the air filter medium, defined as the ratio of final permeability/initial permeability, is less than 3.0,

where the initial permeability is a permeability of polyalphaolefin particles when air containing the polyalphaolefin particles having a number median diameter of 0.25 $\mu$m is passed through the air filter medium at a flow velocity of 5.3 cm/s, and

the final permeability is a permeability of polyalphaolefin particles when air containing the polyalphaolefin particles having a number median diameter of 0.25 $\mu$m is continuously passed through the air filter medium at a flow velocity of 5.3 cm/s and the pressure loss is increased by 250 Pa.

2. The air filter medium according to claim 1, wherein the first fluororesin porous film has a thickness of 30 um or more.

3. The air filter medium according to any one of claims 1 to 2, comprising a fluororesin porous film mainly constituted by

A a fibrillatable polytetrafluoroethylene having a standard specific gravity according to ASTM D 4895 of 2.130 to 2.190,

B a non-fibril-forming non-melting-processable component selected from the group consisting of polytetrafluoroethylene having a number-average molecular weight of 600,000 or less, a melting point of 320°C or higher and 335°C or lower, and a melt viscosity at 380°C of 100 Pa·s to $7.0 \times 10^5$ Pa·s; thermosetting resins; inorganic fillers; and mixtures of the foregoing; and

C a non-fibril-forming hot-melt-processable component having a melting point of lower than 320°C selected from the group consisting of heat-meltable fluoropolymers, polystyrene resins, polyethylene terephthalate resins, polyester resins, polyamide resins, and mixtures of the foregoing resins;

wherein whether or not a material is fibrillatable or non-fibril-forming is determined according to the method described in the specification.

4. A filter pack comprising:

the air filter medium according to any one of claims 1 to 3,
wherein the air filter medium is processed so as to have a zigzag shape in which mountain folds and valley folds are alternately repeated.

5. An air filter unit comprising:

the air filter medium according to any one of claims 1 to 3 or the filter pack according to claim 4; and
a frame body holding the air filter medium or the filter pack.

6. Use of the air filter medium according to any one of claims 1 to 3 while the PAO permeability ratio (final permeability/initial permeability) is less than 3.0.

**Patentansprüche**

1. Luftfiltermedium, umfassend:

eine erste poröse Fluorharzschicht (31) mit einer Dicke von 10 $\mu$m oder mehr, einem Füllfaktor von 2 % oder größer und 9 % oder kleiner und einem Faserdurchmesser von 60 nm oder größer und 200 nm oder kleiner, und eine zweite poröse Fluorharzschicht (32), die in Richtung des Luftflusses im Hinblick auf die erste poröse Fluorharzschicht nachgeschaltet angeordnet ist, mit einem Füllfaktor von 2 % oder größer und 9 % oder kleiner und einem Faserdurchmesser von 60 nm oder größer und 200 nm oder kleiner,

worin die erste poröse Fluorharzschicht (31) einen größeren Faserdurchmesser als die zweite poröse Fluorharzschicht (32) besitzt, und

worin die erste poröse Fluorharzschicht (31) einen kleineren Füllfaktor als die zweite poröse Fluorharzschicht (32) aufweist,

worin der Füllfaktor durch die folgende Formel definiert ist:

```
Füllfaktor (%) = (Basisgewicht der porösen
Schicht)/(Dicke der porösen Schicht)/(spezifische Dichte
des Ausgangsmaterials) x 100
```

worin ein PAO-Durchlässigkeitsverhältnis des Luftfiltermediums, definiert als das Verhältnis letzte Durchlässigkeit/anfängliche Durchlässigkeit, kleiner als 3,0 ist,

worin die anfängliche Durchlässigkeit die Durchlässigkeit für Polyalphaolefin-Partikel ist, wenn Luft, die Polyalphaolefin-Partikel mit einem zahlengewichteten Mediandurchmesser von 0,25 μm enthält, durch das Filtermedium mit einer Flussgeschwindigkeit von 5,3 cm/s geführt wird, und

die letzte Durchlässigkeit die Durchlässigkeit für Polyalphaolefin-Partikel ist, wenn Luft, die Polyalphaolefin-Partikel mit einem zahlengewichteten Mediandurchmesser von 0,25 μm enthält, kontinuierlich durch das Luftfiltermedium mit einer Flussgeschwindigkeit von 5,3 cm/s geführt wird und der Druckverlust um 250 Pa erhöht ist.

2. Luftfiltermedium gemäß Anspruch 1, worin die erste poröse Fluorharzschicht eine Dicke von 30 μm oder größer aufweist.

3. Luftfiltermedium gemäß irgendeinem der Ansprüche 1 bis 2, umfassend eine poröse Fluorharzschicht, die im Wesentlichen aufgebaut ist aus

A einem fibrillierbaren Polytetrafluorethylen mit einer spezifischen Dichte gemäß ASTM D 4895 von 2,130 bis 2,190,

B einer nicht-fibrillenbildenden nichtschmelzverarbeitbaren Komponente, ausgewählt aus der Gruppe bestehend aus Polytetrafluorethylen mit einem zahlengemittelten Molekulargewicht von 600.000 oder kleiner, einem Schmelzpunkt von 320°C oder höher und 335°C oder niedriger und einer Schmelzviskosität bei 380°C von 100 Pa·s bis $7,0 \times 10^5$ Pa·s; warmhärtenden Harzen; anorganischen Füllstoffen; und Mischungen der Vorstehenden; und

C einer nicht- fibrillenbildenden heißschmelzverarbeitbaren Komponente mit einem Schmelzpunkt von niedriger als 320°C, die ausgewählt ist aus der Gruppe bestehend aus wärmeschmelzbaren Fluorpolymeren, Polystyrolharzen, Polyethylenterephthalatharzen, Polyesterharzen, Polyamidharzen und Mischungen der vorstehenden Harze;

worin in Übereinstimmung mit dem Verfahren, das in der Beschreibung beschrieben ist, bestimmt wird, ob ein Material fibrillierbar oder nicht-fibrillenbildend ist.

4. Filterpack, umfassend,

das Luftfiltermedium gemäß irgendeinem der Ansprüche 1 bis 3,

worin das Luftfiltermedium so verarbeitet ist, dass es eine Zickzack-Form aufweist, worin sich Berg-Knickstellen und Tal-Knickstellen alternierend wiederholen.

5. Luftfiltereinheit, umfassend:

das Luftfiltermedium gemäß irgendeinem der Ansprüche 1 bis 3 oder das Filterpack gemäß Anspruch 4, und einen Rahmenkörper, der das Luftfiltermedium oder den Filterpack hält.

6. Verwendung des Luftfiltermediums gemäß irgendeinem der Ansprüche 1 bis 3, während das PAO-Durchlässigkeitsverhältnis (letzte Durchlässigkeit /anfängliche Durchlässigkeit) kleiner als 3,0 ist.

**Revendications**

1. Milieu de filtrage d'air comprenant :

   un premier film (31) poreux en résine fluorée ayant une épaisseur de 10 μm ou plus, un facteur de remplissage de 2 % ou plus et 9 % ou moins, et un diamètre de fibre de 60 nm ou plus et 200 nm ou moins, et un second film (32) poreux en résine fluorée, disposé sur un côté aval d'un écoulement d'air par rapport au premier film poreux en résine fluorée, ayant un facteur de remplissage de 2 % ou plus et 9 % ou moins, et un diamètre de fibre de 60 nm ou plus et 200 nm ou moins,
   dans lequel le premier film (31) poreux en résine fluorée possède un plus grand diamètre de fibre que le second film (32) poreux en résine fluorée, et
   dans lequel le premier film (31) poreux en résine fluorée possède un plus petit facteur de remplissage que le second film (32) poreux en résine fluorée,
   dans lequel le facteur de remplissage est défini par la formule suivante :

   Facteur de remplissage (%) = (poids de base de film poreux)/(épaisseur de film poreux)/(densité de matière première) x 100

   dans lequel un rapport de perméabilité de polyalphaoléfine, PAO, du milieu de filtrage d'air, défini comme étant le rapport de perméabilité finale/perméabilité initiale, est de moins de 3,0,
   où la perméabilité initiale est une perméabilité de particules de polyalphaoléfine lorsque de l'air contenant les particules de polyalphaoléfine ayant un diamètre médian en nombre de 0,25 μm est passé au travers du milieu de filtrage d'air à une vitesse d'écoulement de 5,3 cm/s, et
   la perméabilité finale est une perméabilité de particules de polyalphaoléfine lorsque de l'air contenant les particules de polyalphaoléfine ayant un diamètre médian en nombre de 0,25 μm est passé en continu au travers du milieu de filtrage d'air à une vitesse d'écoulement de 5,3 cm/s et la chute de pression est augmentée de 250 Pa.

2. Milieu de filtrage d'air selon la revendication 1, dans lequel le premier film poreux en résine fluorée possède une épaisseur de 30 μm ou plus.

3. Milieu de filtrage d'air selon l'une quelconque des revendications 1 à 2, comprenant un film poreux en résine fluorée principalement constitué par

   A un polytétrafluoréthylène fibrillable ayant une densité standard selon la norme ASTM D 4895 de 2,130 à 2,190,
   B un constituant ne formant pas de fibrilles et n'étant pas apte à être traité à l'état fondu sélectionné parmi le groupe constitué par un polytétrafluoroéthylène ayant un poids moléculaire moyen en nombre de 600 000 ou moins, un point de fusion de 320 °C ou supérieur et de 335 °C ou inférieur, et une viscosité à l'état fondu à 380 °C de 100 Pa·s à $7,0 \times 10^5$ Pa·s ; des résines thermodurcissables ; des charges inorganiques ; et de mélanges de ce qui précède ; et
   C un constituant ne formant pas de fibrilles et apte à être traité à l'état fondu à chaud ayant un point de fusion inférieur à 320 °C sélectionné parmi le groupe constitué des polymères fluorés thermofusibles, des résines de polystyrène, des résines de poly(téréphtalate d'éthylène), des résines de polyester, des résines de polyamide et des mélanges des résines qui précèdent ;

   dans lequel le fait qu'un matériau soit ou non fibrillable ou ne formant pas de fibrilles est déterminé selon le procédé décrit dans la description.

4. Cartouche filtrante comprenant :

   le milieu de filtrage d'air selon l'une quelconque des revendications 1 à 3,
   dans laquelle le milieu de filtrage d'air est traité de façon à posséder une forme en zigzag dans laquelle des plis formant montagne et des plis formant vallée sont répétés en alternance.

5. Unité formant filtre à air comprenant :

le milieu de filtrage d'air selon l'une quelconque des revendications 1 à 3 ou la cartouche filtrante selon la revendication 4 ; et
un corps formant cadre portant le milieu de filtrage d'air ou la cartouche filtrante.

6. Utilisation du milieu de filtrage d'air selon l'une quelconque des revendications 1 à 3 alors que le rapport de perméabilité de PAO (perméabilité finale/perméabilité initiale) est de moins de 3,0.

FIG. 1

FIG. 2

3

21
31
22

# FIG. 3

40

1, 2, 3

# FIG. 4

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017064713 A
- EP 3427808 A1
- EP 3357564 A1
- EP 3061512 A1
- JP 53060979 A
- JP 57000135 A
- JP 61016907 A
- JP 62104816 A
- JP 62190206 A
- JP 63137906 A
- JP 2000143727 A
- JP 2002201217 A
- WO 2007046345 A
- WO 2007119829 A
- WO 2009001894 A
- WO 2010113950 A
- WO 2013027850 A
- JP 2007046345 A
- JP 60042446 A
- JP 64001711 A
- JP 2261810 A
- JP 11240917 A
- JP 11240918 A
- WO 2003033555 A
- WO 2005061567 A
- WO 2007005361 A
- WO 2011055824 A
- JP 10147617 A
- JP 61162503 A
- JP 48078252 A
- WO 2004050727 A
- WO 2009020187 A
- WO 2010114033 A
- JP 2017159281 A